# EUROPÄISCHE PATENTSCHRIFT

(11) **EP 2 675 638 B1**
(45) Veröffentlichungstag und Bekanntmachung des Hinweises auf die Patenterteilung: **10.02.2016**
(21) Anmeldenummer: 12704689.4
(22) Anmeldetag: 13.02.2012
(51) Int. Cl.: B60H 1/22, B60N 2/56

(54) **SCHALTUNGSANORDNUNG FÜR EINE ELEKTRISCHE SITZHEIZUNG**
CIRCUIT ARRANGEMENT FOR AN ELECTRIC SEAT HEATING MEANS
CIRCUIT DESTINÉ AU CHAUFFAGE ÉLECTRIQUE D'UN SIÈGE

(30) Priorität: 16.02.2011 DE 102011011344
(43) Veröffentlichungstag der Anmeldung: 25.12.2013
(73) Patentinhaber: Audi AG, 85045 Ingolstadt (DE)
(72) Erfinder: MAYER, Werner, 85084 Reichertshofen (DE)
(74) Vertreter: Brandt, Kai
(86) Internationale Anmeldenummer: PCT/EP2012/000634
(87) Internationale Veröffentlichungsnummer: WO 2012/110224

(56) Entgegenhaltungen:
- DE-A1-102006 030 337
- DE-B4- 19 811 823

## Beschreibung

Die Erfindung betrifft eine Schaltungsanordnung für eine elektrische Sitzheizung eines Fahrzeugs nach Patentanspruch 1.

Bekannte Schaltungsanordnungen für elektrische Sitzheizungen in Fahrzeugen besitzen ein Heizelement in Form eines Heizwiderstands sowie einen temperaturabhängigen Sensor-Widerstand, der zur Ermittlung der Sitztemperatur mit einer Messelektronik verbunden ist. Eine derartige Schaltungsanordnung mit den Merkmalen des Oberbegriffs des Anspruchs 1 ist aus der DE 198 11 823 B4 bekannt. Bei dieser bekannten Schaltungsanordnung sind der Sensor-Widerstand und der Heizwiderstand an das gleiche Massepotential im Bereich des Fahrzeugsitzes angeschlossen. Das entfernt vom Fahrzeugsitz befindliche Steuergerät, welches die Messelektronik enthält, besitzt keine Masseverbindung zu der Sitzmasse, an der der Sensor-Widerstand und der Heizwiderstand angeschlossen sind. Das Steuergerät ist an einer anderen Masse, die sich entfernt vom Fahrzeugsitz befindet, angeschlossen. Bei derart entfernt voneinander angeordneten Masseverbindungen tritt regelmäßig ein so genannter Masseversatz auf, der durchaus im Bereich von +/- 1 Volt liegen kann. Die Messung am Sensor-Widerstand wird durch diesen Masseversatz verfälscht, so dass mit der bekannten Schaltungsanordnung eine exakte Temperaturbestimmung nicht möglich ist.

Aus der DE 10 2006 030 337 A1 ist eine Schaltungsanordnung bekannt, bei der die Sitzheizungstemperatur auf der Grundlage des Widerstandswertes des Heizdrahtes der Sitzheizung ermittelt wird. In der Schaltungsanordnung kann zwischen der Steuergeräte-Masse und der Sitzmasse ein Masseversatz erfasst werden.

Der Erfindung liegt die Aufgabe zugrunde, eine Schaltungsanordnung für eine elektrische Sitzheizung eines Fahrzeugs anzugeben, die einen geringen Verkablungsaufwand zwischen Fahrzeugsitz und Steuergerät ermöglicht und gleichzeitig eine hohe Messgenauigkeit bei der Bestimmung der Sitztemperatur aufweist.

Die Lösung dieser Aufgabe erhält man durch die im Patentanspruch 1 angegebenen Merkmale.

Gemäß dem Patentanspruch 1 ist der Heizwiderstand einerseits über einen Sensor-Widerstand und einen weiteren Widerstand und andererseits über einen Leistungspfad mit der Versorgungsspannung verbindbar, wobei das Steuergerät zur Bestimmung der Sitztemperatur nicht nur den Spannungsabfall am Sensor-Widerstand, sondern auch die Potentialdifferenz zwischen dem Potential der Sitzmasseleitung, an der der Heizwiderstand angeschlossen ist, und dem Potential der Steuergeräte-Masse, an die das Steuergerät angeschlossen ist, misst. Die Potentialdifferenz kann bei derart weit entfernt im Fahrzeug angeordneten Massepunkten in einem Bereich von etwa +/- 1 Volt liegen und wird im vorliegenden Fall bei der Bestimmung der Sitztemperatur als Korrekturwert für den am Soll-Widerstand gemessenen Spannungsabfall berücksichtigt. Dadurch erhält man einen sehr genauen Messwert zur Bestimmung der Sitztemperatur, wobei keine Masseverbindungsleitung zwischen dem Steuergerät und der Masseleitung im Bereich des Fahrersitzes erforderlich ist. Als Kabelverbindungen zwischen dem Steuergerät und dem Fahrersitz genügen somit eine als reine Messleitung dienende Kabelverbindung zum temperaturabhängigen Sensor-Widerstand und eine als Leistungspfad dienende Kabelverbindung zum Heizwiderstand.

Erfindungsgemäß weist das Steuergerät einen ersten und einen zweiten Messeingang auf, wobei an dem ersten Messeingang die zum Sensor-Widerstand führende Messsignalleitung angeschlossen ist, und wobei der zweite Messeingang an die elektrische Verbindung zwischen Sensor-Widerstand und Heizwiderstand angeschlossen ist und bei abgeschalteter Sitzheizung die Potentialdifferenz zwischen der Steuergeräte-Masse und der Sitzmasseleitung misst. Die Messung erfolgt über einen hochohmigen Eingang der im Steuergerät enthaltenen Messelektronik, so dass der äußerst niederohmige Heizwiderstand praktisch keinen Einfluss auf die Potentialmessung hat. Der Widerstandswert des Heizwiderstandes liegt nämlich etwa in einem Bereich zwischen 1 bis 3 Ohm.

Gemäß der Erfindung ist die Versorgungsspannung über einen ersten elektrischen Schalter an den Heizwiderstand anlegbar und über einen zweiten elektrischen Schalter an die zum temperaturabhängigen Sensor-Widerstand führende Signalleitung anlegbar, wobei beide elektrische Schalter vom Steuergerät betätigbar sind. Der erste elektrische Schalter betätigt den Leistungspfad, weshalb hierfür als elektrischer Schalter vorzugsweise ein Leistungstransistor vorgesehen ist. Auch der zweite elektrische Schalter ist vorzugsweise als Transistor ausgebildet, wodurch sich für die gesamte Schaltungsanordnung ein kostengünstiger Gesamtaufbau ergibt.

Die Erfindung wird nachfolgend anhand eines in der Zeichnung dargestellten Ausführungsbeispieles näher erläutert.

Es zeigen:
- Fig. 1: eine erfindungsgemäße Schaltungsanordnung mit einer Messeinrichtung, die zwei Messeingänge aufweist, und
- Fig. 2: eine nicht von der Erfindung umfasste Schaltungsanordnung, deren Messeinrichtung einen einzigen Messeingang aufweist.

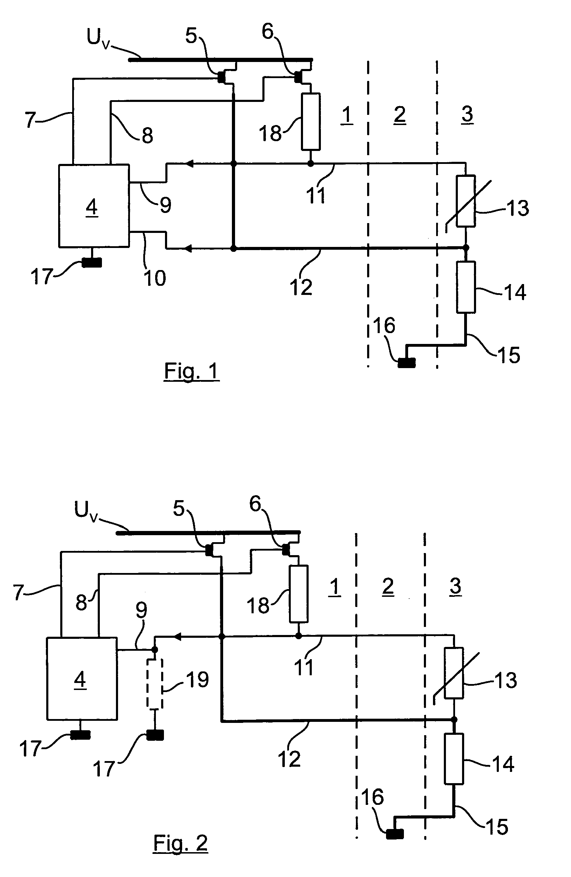

Die in Fig. 1 dargestellte Schaltungsanordnung ist durch senkrechte unterbrochene Linien in drei Bereiche unterteilt, die das Steuergerät 1, einen Kabelbaum 2 und einen Fahrzeugsitz 3 umfassen. Im Steuergerät 1 ist eine Messelektronik 4 enthalten, die mit Schalttransistoren 5, 6 über Steuerleitungen 7, 8 verbunden ist. Außerdem besitzt die Messelektronik 4 zwei Messeingänge 9, 10, die einerseits an eine Messsignalleitung 11 und andererseits an einen Leistungspfad 12 angeschlossen sind. Die Messsignalleitung 11 führt zu einem temperaturabhängigen Sensor-Widerstand 13, der im Ausführungsbeispiel als NTC-Widerstand ausgebildet ist, dessen temperaturabhängiger Widerstandswert bei 80°C 1kOhm und bei 25°C 8kOhm beträgt. Bezüglich der Messsignalleitung 11 ist der Sensor-Widerstand 13 über einen in Reihe geschalteten Heizwiderstand 14 und über eine Sitzmasseleitung 15 mit einem Massepunkt 16 im Bereich des Fahrzeugsitzes 3 verbunden. Der Massepunkt 16 kann auch als Sitzmasse bezeichnet werden.

Die Messelektronik 4 des Steuergeräts 1 ist an eine Steuergeräte-Masse 17 angeschlossen, die sich entfernt vom Massepunkt 16 befindet. Bei derart entfernt angeordneten Massepunkten treten in einem Fahrzeug Potentialdifferenzen auf, d.h. das Massepotential zwischen zwei derart entfernt angeordneten Massepunkten kann durchaus um +/- 1 Volt voneinander abweichen.

Das Steuergerät 1 kann über die Messelektronik 4 die beiden Schalttransistoren 5, 6 betätigen, um die Versorgungsspannung U_{V} über den Schalttransistor 5 mit dem Leistungspfad 12 oder über den Schalttransistor 6 und einen Widerstand 18 mit der Messsignalleitung 11 zu verbinden. Im normalen Heizbetrieb ist der Schalttransistor 5 auf Durchgang geschaltet und liegt somit die Versorgungsspannung U_{V} über den Leistungspfad 12 an den Heizwiderstand 14 an. Um nun eine Messung der Sitztemperatur durchzuführen, wird der Schalttransistor 5 von der Messelektronik 7 gesperrt und der Schalttransistor 6 auf Durchgang geschaltet, so dass die Reihenschaltung aus den Widerständen 18, 13, 14 an der Versorgungsspannung U_{V} anliegt. Der Widerstand 18 kann im dargestellten Ausführungsbeispiel einen Widerstandswert von 10 kOhm haben, so dass sich am Sensor-Widerstand 13 ein von der Sitztemperatur abhängiger Spannungsabfall ergibt. Der jeweils gemessene Spannungsabfall am Sensor-Widerstand 13 wird in der Messelektronik 4 als Messwert gespeichert.

Über den zweiten Messeingang 10 misst nun die Messelektronik 4 über den sehr niederohmigen Heizwiderstand 14 das Massepotential an der Sitzmasseleitung 15 bzw. am Massepunkt 16, bezogen auf die Steuergeräte-Masse 17. Das gemessene Massepotential stellt die Potentialdifferenz zwischen dem Massepunkt 16 und der Steuergeräte-Masse 17 dar. Diese Potentialdifferenz kann auch als Masseversatz bezeichnet werden und muss nun von dem über die Messsignalleitung 11 am Sensor-Widerstand 13 gemessenen Spannungsabfall abgezogen werden, wodurch sich ein korrigierter Messwert zur Bestimmung der Sitztemperatur ergibt. Die Messeinrichtung 4 kann nun aus diesem korrigierten Messwert anhand einer abgespeicherten Messwertkennlinie, die für den verwendeten Sensor-Widerstand 13 abgespeichert ist, den zugehörigen Temperaturwert zur Bestimmung der Sitztemperatur auslesen und zur Temperaturregelung in an sich bekannter Weise heranziehen. Wird eine gewünschte Sitztemperatur erreicht, schaltet das Steuergerät 1 bzw. deren Messelektronik 4 über den Schalttransistor 5 den Leistungspfad 12 von der Versorgungsspannung U_{V} ab. Sobald ein vorgegebener Schwellwert der Sitztemperatur dann wieder unterschritten wird, wird der Leistungspfad 12 wieder an die Versorgungsspannung U_{V} angeschaltet.

Bei der nicht von der Erfindung umfassten Schaltungsanordnung von Fig. 2 sind weitgehend die gleichen Bauelemente und elektronischen Einheiten verwendet, wie bei Fig. 1, weshalb hierfür gleiche Bezugszahlen verwendet sind. Die Messelektronik 4 besitzt allerdings in diesem zweiten Ausführungsbeispiel nur einen Messeingang 9, der über einen Pull-down-Widerstand 19 (Stabilisierungswiderstand) mit der Steuergerätemasse 17 verbunden ist. Der Pull-down-Widerstand 19 ist mit unterbrochenen Linien dargestellt, da dieser zwar schaltungstechnisch sinnvoll sein kann, jedoch für die eigentliche Funktion und für das Verständnis der Schaltungsanordnung nicht erforderlich ist.

Bei der nicht von der Erfindung umfassten Schaltungsanordnung wird zunächst zur Temperaturbestimmung der Spannungsabfall am Sensor-Widerstand 13 wie bei dem Ausführungsbeispiel von Fig. 1 gemessen. Der Schalttransistor 6 ist dabei auf Durchgang geschaltet. Zur Bestimmung des Masseversatzes zwischen der Steuergeräte-Masse 17 und dem Massepunkt 16 wird nun jedoch bei Fig. 2 der Schalttransistor 6 von der Messeinrichtung 4 über den Steuereingang 8 gesperrt, so dass über den hochohmigen Messeingang 9 das Massepotential am Massepunkt 16 über die in Reihe geschalteten beiden Widerstände 13, 14 gemessen wird. Dabei kann es zweckmäßig sein, den Pull-down-Widerstand 19 mittels eines hier nicht dargestellten elektrischen Schalters vom Messeingang 9 abzutrennen, um eine mögliche Beeinflussung des Messergebnisses durch diesen Pull-down-Widerstand 19 zu vermeiden.

## Patentansprüche

1. Schaltungsanordnung für eine elektrische Sitzheizung eines Fahrzeugs, mit einem im Bereich eines Fahrzeugsitzes (3) an eine Sitzmasseleitung (15) angeschlossen Heizwiderstand (14) als Sitzheizelement und mit einem im Fahrzeugsitz (3) angeordneten temperaturabhängigen Sensor-Widerstand (13), mit einem außerhalb des Fahrzeugsitzes (3) angeordneten und entfernt vom Fahrzeugsitz (3) an eine Steuergeräte-Masse (17) angeschlossenen Steuergerät (1) zur Aktivierung des Heizwiderstands (14) und zur Aktivierung der Spannungsmessung am Sensor-Widerstand (13), wobei die Spannungsmessung zur Temperaturbestimmung bei kurzzeitig von der Versorgungsspannung (U_{V}) abgeschalteter Sitzheizung erfolgt, wobei der Heizwiderstand (14) einerseits über eine Reihenschaltung, bestehend aus dem Sensor-Widerstand (13) und einem weiteren Widerstand (18), an die Versorgungsspannung (U_{V}) und andererseits über einen Leistungspfad (12) an die Versorgungsspannung (U_{V}) anschaltbar ist, **dadurch gekennzeichnet, dass** das Steuergerät (1) über eine Messsignalleitung (11) den Spannungsabfall am Sensor-Widerstand (13) misst und als Messwert speichert, wobei das Steuergerät (1) die Potentialdifferenz zwischen dem Potential der Sitzmasseleitung (15) und dem Potential der Steuergeräte-Masse (17) ermittelt und bei der Bestimmung der Sitztemperatur zur Messwertkorrektur berücksichtigt, wobei das Steuergerät (1) einen ersten und einen zweiten Messeingang (9; 10) hat, an dem ersten Messeingang (9) die zum Sensor-Widerstand (13) führende Messsignalleitung (11) angeschlossen ist, und der zweite Messeingang (10) an die elektrische Verbindung zwischen Sensor-Widerstand (13) und Heizwiderstand (14) angeschlossen ist und bei abgeschalteter Sitzheizung die Potenzialdifferenz zwischen der Steuergeräte-Masse (17) und der Sitzmasseleitung (15) misst, und wobei die Versorgungsspannung (U_{V}) über einen ersten elektrischen Schalter (5) an die elektrische Verbindung zwischen Sensor-Widerstand (13) und Heizwiderstand (14) anlegbar ist, und die Reihenschaltung aus Heizwiderstand (14) und Sensor-Widerstand (13) über dem weiteren an die Signalleitung (11) angeschlossenen Widerstand (18) über einen zweiten elektrischen Schalter (6) an die Versorgungsspannung (U_{V}) anlegbar ist, und beide elektrische Schalter vom Steuergerät (1) aktivierbar sind.

## Claims

1. Circuit arrangement for an electrical seat heater of a motor vehicle, with a heating resistor (14) as a seat heating element connected to a seat earth lead (15) in the area of the vehicle seat (3) and with a temperature-dependent sensor resistor (13) arranged in the vehicle seat (3), with a control device (1) for activating the heating resistor (14) and activating the voltage measurement on the sensor resistor (13), said control device being arranged outside the vehicle seat (3) and remote from the vehicle seat (3) and connected to a control device earth (17), wherein the voltage measurement for temperature determination takes place with the seat heating being briefly disconnected from the supply voltage (U_{V}), wherein on the one hand the heating resistor (14) can be connected to the supply voltage (U_{V}) via a series circuit comprising the sensor resistor (13) and a further resistor (18) and on the other hand can be connected to the supply voltage (U_{V}) via a power transmission path (12), **characterised in that**
via a measuring signal lead (11) the control device (1) measures the voltage drop at the sensor resistor (13) and stores it as a measured value, wherein the control device (1) records the potential difference between the potential of the seat earth lead (15) and the potential of the control unit earth (17) and takes it into account in determining the seat temperature for measurement correction, wherein the control device (1) has a first and a second measuring input (9; 10), the measuring signal lead (11) leading to the sensor resistor (13) being connected to the first measuring input, and the second measuring input (10) being connected to the electrical connection between the sensor resistor (13) and heating resistor (14) and, with the seating heating switched off, measuring the potential difference between the control unit earth (17) and the seat earth lead (15), and wherein the supply voltage (U_{V}) can be applied via a first electrical switch (5) to the electrical connection between the sensor resistor (13) and heating resistor (14) and the series circuit of heating resistor (14) and sensor resistor (13) can be connected to the supply voltage (U_{V}) via the further resistor (18) connected to the signal lead (11) by means of a second electrical switch (6) and both electrical switches can be activated by the control unit (1).

## Revendications

1. Circuit pour un chauffage électrique de siège d'un véhicule (3), avec comme élément de chauffage de siège une résistance chauffante (14) raccordée à un câble (15) de mise à la masse du siège dans la zone d'un siège de véhicule (3) et avec une résistance de capteur (13) dépendante de la température et agencée dans le siège de véhicule (3), avec un appareil de commande (1) agencé en dehors du siège de véhicule (3) et raccordé à une masse (17) d'appareils de commande éloignée du siège de véhicule (3) pour l'activation de la résistance chauffante (14) et pour l'activation de la mesure de tension à la résistance de capteur (13), la mesure de tension pour la détermination de température s'effectuant avec un chauffage de siège brièvement coupé de la tension d'alimentation (U_{V}), la résistance chauffante (14) pouvant être branchée d'une part via un circuit série, constitué de la résistance de capteur (13) et d'une autre résistance (18), à la tension d'alimentation (U_{V}) et d'autre part via une voie de puissance (12) à la tension d'alimentation (U_{V}),
**caractérisé en ce que** l'appareil de commande (1) mesure par l'intermédiaire d'une ligne de signal de mesure (11) la chute de tension à la résistance de capteur (13) et la mémorise comme valeur mesurée, l'appareil de commande (1) déterminant la différence de potentiel entre le potentiel du câble (15) de mise à la masse du siège et le potentiel de la masse (17) d'appareils de commande et la prenant en compte lors de la détermination de la température de siège pour la correction de valeur mesurée, l'appareil de commande (1) ayant une première et une deuxième entrée de mesure (9; 10), première entrée de mesure (9) à laquelle la ligne de signal de mesure (11) conduisant à la résistance de capteur (13) est raccordée et deuxième entrée de mesure (10) à laquelle la liaison électrique entre la résistance de capteur (13) et la résistance chauffante (14) est raccordée et qui, lorsque le chauffage de siège est coupé, mesure la différence de potentiel entre la masse (17) d'appareils de commande et le câble (15) de mise à la masse du siège, la tension d'alimentation (U_{V}) étant applicable par l'intermédiaire d'un premier interrupteur électrique (5) à la liaison électrique entre la résistance de capteur (13) et la résistance chauffante (14) et la tension d'alimentation (U_{V}) étant applicable par l'intermédiaire d'un deuxième interrupteur électrique (6) au circuit en série composé de la résistance chauffante (14) et de la résistance de capteur (13) par l'intermédiaire de l'autre résistance (18) raccordée à la ligne de signal (11), les deux interrupteurs électriques pouvant être activés par l'appareil de commande (1).
